# EUROPEAN PATENT APPLICATION

(11) **EP 3 246 844 A1**
(43) Date of publication of application: **22.11.2017**
(21) Application number: 15877484.4
(22) Date of filing: 30.01.2015
(51) Int. Cl.: G06F 21/74

(54) **SYSTEM PROCESSING METHOD, SYSTEM PROCESSING DEVICE AND TERMINAL**

(30) Priority: 16.01.2015 CN 201510024075
(71) Applicant: Yulong Computer Telecommunication Scientific (Shenzhen) Co., Ltd., Shenzhen, Guangdong 518057 (CN)
(72) Inventor: LIU, Yaxin, Shenzhen Guangdong 518057 (CN)
(74) Representative: Cordina, Kevin John
(86) International application number: PCT/CN2015/071994
(87) International publication number: WO 2016/112566

(57) **Abstract**

The present disclosure provides a system processing method, a system processing device, and a terminal. The system processing method includes: determining whether communication between the terminal and a target wearable device is normal; allowing to switch from a current system to a target system in a system switching mode when a determination result is yes; if not, prohibiting access to the target system in the system switching mode or controlling specified applications in the target system to be unable to run normally after the target system is accessed in the system switching mode. By utilizing the technical solution, an illegal user can be judged accurately, and the illegal user cannot access the target system having the higher security level in the system switching mode or cannot use the target system normally even if the illegal users access the target system, thereby ensuring security of the target system and internal data therein.

## Description

### CROSS-REFERENCE TO RELATED APPLICATIONS

This application claims priority of Chinese Patent Application No. 201510024075.8 filed on January 16, 2015, entitled "system processing method, system processing device and terminal," in the SIPO (State Intellectual Property Office of the People's Republic of China), the entire contents of which are incorporated by reference in this application.

### FIELD

The present disclosure relates to a technical field of terminals, in particular to a system processing method, a system processing device, and a terminal.

### BACKGROUND

At present, a terminal in the related art is equipped with a dual system, which includes an ordinary system having a lower security level and a security system having a higher security level, a switching method of the dual systems is performed to switch between the dual systems by a specific operation (such as inputting a password instruction and the like) on the terminal generally.

However, the above-mentioned switching method of the dual systems is merely switched between the dual systems, without considering a risk of leaking data in the security system having the high security level when different users use a same terminal, that is, when different users use the same terminal, an interface seen by the users is the same. Even though a current system of the terminal is the ordinary system having the lower security level, but all of the different users can use the switching method that switches to the security system, therefore the existence of the security system in the terminal will be known. Then the risk that the security system is illegally decoded is further improved, and the data in the security system may be leaked out illegally, thus, security performance of the terminal is reduced, and further user experience is reduced.

Therefore, when a same terminal is used by different users, how to ensure data security of the system having the higher security level in the terminal becomes an urgent problem to be solved.

### SUMMARY OF THE INVENTION

Based on the above problems, the present disclosure provides a novel technical solution, which can accurately judge illegal users, make the illegal users cannot access a target system having a higher security in a system switching mode or even if the target system is accessed via the system switching mode by the illegal users, the illegal users cannot use the target system normally, thereby ensuring security of the target system having the higher security level and internal data therein.

Therefore, according to one aspect of the present disclosure, a system processing method is provided for a terminal, the terminal including a plurality of systems, the method includes: determining whether communication between the terminal and a target wearable device is normal; allowing to switch from a current system to a target system in the system switching mode to use the target system normally when a determination result is yes; if not, prohibiting access to the target system in the system switching mode or controlling specified applications in the target system to be unable to run normally after the target system is accessed in the system switching mode; the target wearable device being a wearable device bound to the terminal, the target system being any system among the plurality of systems having a higher security level than the current system, and the system switching mode being a mode for switching the current system to the target system.

In the technical solution, as the target wearable device is a wearable device carried by an owner of the terminal, therefore, an identity of the user can be identified by determining whether communication between the terminal and the target wearable device is normal. If the communication is normal, it is indicated that the target wearable device is closer to the terminal, and the user of the terminal is further determined to be the owner of the terminal, but not an illegal user. Accordingly, a corresponding function of the system switching mode can be used, the current system is allowed to switch to the target system in the system switching mode, and the target system can be used normally. Otherwise, if the communication is abnormal, it is indicated that the target wearable device is far from the terminal, and the user of the terminal is further determined to be an illegal user, but not the owner of the terminal. Accordingly, the system switching mode can be hidden or the corresponding function is prohibited, or functions of the target system are limited, so that the user cannot use the system switching mode to access the target system, or cannot utilize the target system normally even if the user accesses the target system in the system switching mode, thereby ensuring security of the target system having a higher security level and internal data therein.

The system switching mode includes a software system switching mode and a hardware system switching mode, and includes all modes that can switch the current system to the target system, for example, the system switching mode can be a virtual identifier to switch from the current system to the target system or a physical switching key to switch from the current system to the target system;

When the system switching mode is the software system switching mode, allowing to switch from the current system to the target system in the system switching mode to use the target system normally includes: displaying an icon corresponding to the system switching mode on a display interface of the terminal, for the owner of the terminal switching the current system to the target system in the system switching mode and utilizing the target system normally. Prohibiting access to the target system in the system switching mode includes: hiding the icon corresponding to the system switching mode and further hiding the target system having the higher security level, so that the user of the terminal does not know of the existence of the target system having the higher security level and has no will to decode the target system for stealing private data of the target system, thus the security of the target system having the higher security level and the internal data can be ensured; or closing a switching function corresponding to the system switching mode to prohibit the user of the terminal from accessing the target system in the system switching mode;

When the system switching mode is the hardware system switching mode, allowing to switch from the current system to the target system in the system switching mode to use the target system normally includes: displaying the system switching mode on the display interface of the terminal and activating the system switching function corresponding to the system switching mode, so that the owner of the terminal switches the current system to the target system according to the system switching mode and utilizes the target system normally. Prohibiting access to the target system in the system switching mode includes: hiding the system switching mode or closing the system switching function corresponding to the system switching mode, so that the owner of the terminal cannot switch the current system to the target system;

No matter whether the system switching mode is the software system switching mode or the hardware system switching mode, the specified applications includes: applications related to data in the target system. Controlling the specified applications in the target system to be unable to run normally after the target system is accessed in the system switching mode includes: controlling a contact list, call logs, short messages, WECHAT™ messages, Multimedia Messaging Service (MMS) messages, notepads, voice services, data services, and other applications to be disabled, so that the user of the terminal cannot utilize the target system normally, and further cannot view or use data in the target system having the higher security level or execute illegal operations in the target system, thereby the security of the data in a system having a higher authority can be ensured sufficiently.

In the above embodiment, preferably, determining whether the communication between the terminal and the target wearable device is normal includes: controlling the terminal to send a communication request to the target wearable device; determining whether the terminal receives a communication response from the target wearable device within a preset interval, determining that the communication between the terminal and the target wearable device is normal when a determination result is yes; if not, determining that the communication between the terminal and the target wearable device is abnormal.

In the technical solution, as the communication between the target wearable device and the terminal is limited by a distance, thus, by determining whether the communication response is received from the target wearable device within the preset interval, it can be determined that whether the user of the terminal is an illegal user accurately. That is, if the illegal user is using the terminal, the illegal user must be far from an owner of the target wearable device (namely the owner of the terminal), thus the target wearable device cannot receive any request signal. Accordingly, the terminal cannot receive any communication response from the target wearable device within the preset interval, and the communication between them is abnormal. Otherwise, if the terminal receives the communication response from the target wearable device within the preset interval, the communication between them is normal. Certainly, communication ways between them may be wired communication ways or wireless communication ways, the wireless communication ways may be BLUETOOTH™, 2.4 G, or other communication ways.

In the above technical solution, preferably, when the target wearable device includes a plurality of wearable devices, determining whether the communication between the terminal and the target wearable device is normal includes: determining that the communication between the terminal and the target wearable device is normal when a number of wearable devices that communicate with the terminal normally is greater than a preset number; if not, determining that the communication between the terminal and the target wearable device is abnormal.

In the technical solution, determining whether the communication between the terminal and the target wearable device is normal by determining whether the number of the wearable devices that communicate with the terminal normally is greater than the preset number, can improve an accuracy rate of determining whether the communication is normal, and avoid a misjudge.

In the above technical solution, preferably, when the target wearable device communicates with the terminal, the system processing method further includes sending a prompt signal to the terminal and the other wearable devices among the target wearable device if the target wearable device is disconnected to the terminal.

In the technical solution, when the target wearable device communicates with the terminal, the prompt signal is sent to the terminal and the other wearable devices among the target wearable device if the target wearable device is disconnected to the terminal, thereby avoiding a misoperation of the user and avoiding a disconnection of the communication as a distance between the target wearable device and the terminal is widened unintentionally when the target wearable device communicates with the terminal. Meanwhile, theft of the terminal and the target wearable device can be avoided and states of the target wearable device and the terminal can be prompted to the user timely.

In the above technical solution, preferably, the target wearable device includes at least one of wearable glasses, wearable earrings, a wearable watch, and a wearing bracelet. Allowing to switch from a current system to a target system in a system switching mode to use the target system normally when a determination result is yes; if not, prohibiting access to the target system in the system switching mode or controlling specified applications in the target system to be unable to run normally after the target system is accessed in the system switching mode includes: displaying an icon corresponding to the system switching mode when the determination result is yes; if not, hiding the icon corresponding to the system switching mode or prohibiting a system switching function corresponding to the system switching mode.

In the technical solution, the target wearable device includes, but is not limited to the above mentioned types, and further includes wearable headsets and the like; and if the target wearable device can communicate with the terminal normally, it is represented that the user of the terminal is the owner of the terminal, but not the illegal user. Therefore, the icon corresponding to the system switching mode can be displayed in the current system, for the owner of the terminal to switch the current system to the target system in the system switching mode. Otherwise, if the communication is abnormal, it is represented that the target wearable device is far from the terminal, and further represented that the user of the terminal is the illegal user, but not the owner of the terminal. Therefore, the icon corresponding to the system switching mode can be hid in the current system, so that the user of the terminal does not know of the existence of the target system having the higher security level and has no will to decode the target system for stealing private data of the target system. Thus the security of the target system having the higher security level and the internal data can be ensured, or the user of the terminal is prohibited to access the target system in the system switching mode by closing a switching function corresponding to the system switching mode, so as to ensure the security of the data of the target system.

According to the other aspect of the present disclosure, a system processing device used in a terminal is provided, the terminal including a plurality of systems, the system processing device includes: a determination unit that determines whether communication between the terminal and a target wearable device is normal; a processing unit that allows to switch from a current system to a target system in a system switching mode to use the target system normally when a determination result is yes; if not, prohibits accessing the target system in the system switching mode or controls specified applications in the target system to be unable to run normally after the target system is accessed in the system switching mode; the target wearable device being a wearable device bound to the terminal, the target system being any system among the plurality of systems having a higher security level than the current system, and the system switching mode being a system switching mode for switching the current system to the target system.

In the technical solution, as the target wearable device is a wearable device carried by an owner of the terminal, therefore, an identity of the user can be identified by determining whether communication between the terminal and the target wearable device is normal. If the communication is normal, it is indicated that the target wearable device is closer to the terminal, and the user of the terminal is further determined to be the owner of the terminal, but not an illegal user. Accordingly, a corresponding function of the system switching mode can be used, the current system is allowed to switch to the target system in the system switching mode, and the target system can be used normally. Otherwise, if the communication is abnormal, it is indicated that the target wearable device is far from the terminal, and the user of the terminal is further determined to be an illegal user, but not the owner of the terminal. Accordingly, the system switching mode can be hidden or the corresponding function is prohibited, or functions of the target system are limited, so that the user cannot use the system switching mode to access the target system, or cannot utilize the target system normally even if the user accesses the target system in the system switching mode, thereby ensuring security of the target system having a higher security level and internal data therein.

The system switching mode includes a software system switching mode and a hardware system switching mode, and includes all modes that can switch the current system to the target system, for example, the system switching mode can be a virtual identifier to switch from the current system to the target system or a physical switching key to switch from the current system to the target system;

When the system switching mode is the software system switching mode, allowing to switch from the current system to the target system in the system switching mode to use the target system normally includes: displaying an icon corresponding to the system switching mode on a display interface of the terminal, for the owner of the terminal switching the current system to the target system in the system switching mode and utilizing the target system normally. Prohibiting access to the target system in the system switching mode includes: hiding the icon corresponding to the system switching mode and further hiding the target system having the higher security level, so that the user of the terminal does not know of the existence of the target system having the higher security level and has no will to decode the target system for stealing private data of the target system, thus the security of the target system having the higher security level and the internal data can be ensured; or closing a switching function corresponding to the system switching mode to prohibit the user of the terminal from accessing the target system in the system switching mode;

When the system switching mode is the hardware system switching mode, allowing to switch from the current system to the target system in the system switching mode to use the target system normally includes: displaying the system switching mode on the display interface of the terminal and activating the system switching function corresponding to the system switching mode, so that the owner of the terminal switches the current system to the target system according to the system switching mode and utilizes the target system normally. Prohibiting access to the target system in the system switching mode includes: hiding the system switching mode or closing the system switching function corresponding to the system switching mode, so that the owner of the terminal cannot switch the current system to the target system;

No matter whether the system switching mode is the software system switching mode or the hardware system switching mode, the specified applications includes: applications related to data in the target system. Controlling the specified applications in the target system to be unable to run normally after the target system is accessed in the system switching mode includes: controlling a contact list, call logs, short messages, WECHAT™ messages, MMS messages, notepads, voice services, data services, and other applications to be disabled, so that the user of the terminal cannot utilize the target system normally, and further cannot view or use data in the target system having the higher security level or execute illegal operations in the target system, thereby the security of the data in a system having a higher authority can be ensured sufficiently.

In the above embodiment, preferably, the determination unit is configured to: control the terminal to send a communication request to the target wearable device; determine whether the terminal receives a communication response from the target wearable device within a preset interval, determine that the communication between the terminal and the target wearable device is normal when a determination result is yes; if not, determine that the communication between the terminal and the target wearable device is abnormal.

In the technical solution, as the communication between the target wearable device and the terminal is limited by a distance, thus, by determining whether the communication response is received from the target wearable device within the preset interval, it can be determined that whether the user of the terminal is an illegal user accurately. That is, if the illegal user is using the terminal, the illegal user must be far from an owner of the target wearable device (namely the owner of the terminal), thus the target wearable device cannot receive any request signal. Accordingly, the terminal cannot receive any communication response from the target wearable device within the preset interval, and the communication between them is abnormal. Otherwise, if the terminal receives the communication response from the target wearable device within the preset interval, the communication between them is normal. Certainly, communication ways between them may be wired communication ways or wireless communication ways, the wireless communication ways may be BLUETOOTH™, 2.4 G, or other communication ways.

In the above technical solution, preferably, when the target wearable device includes a plurality of wearable devices, the determination unit is further configured to: determine that the communication between the terminal and the target wearable device is normal when a number of wearable devices that communicate with the terminal normally is greater than a preset number; if not, determine that the communication between the terminal and the target wearable device is abnormal.

In the technical solution, determining whether the communication between the terminal and the target wearable device is normal by determining whether the number of the wearable devices that communicate with the terminal normally is greater than the preset number, can improve an accuracy rate of determining whether the communication is normal, and avoid a misjudge.

In the above technical solution, preferably, when the target wearable device communicates with the terminal, the system processing device further includes a sending unit that sends a prompt signal to the terminal and the other wearable devices among the target wearable device if the target wearable device is disconnected to the terminal.

In the technical solution, when the target wearable device communicates with the terminal, the prompt signal is sent to the terminal and the other wearable devices among the target wearable device if the target wearable device is disconnected to the terminal, thereby avoiding a misoperation of the user and avoiding a disconnection of the communication as a distance between the target wearable device and the terminal is widened unintentionally when the target wearable device communicates with the terminal. Meanwhile, theft of the terminal and the target wearable device can be avoided and states of the target wearable device and the terminal can be prompted to the user timely.

In the above technical solution, preferably, the target wearable device includes at least one of wearable glasses, wearable earrings, a wearable watch, and a wearing bracelet. The processing unit is configured to: display an icon corresponding to the system switching mode when the determination result is yes; if not, hide the icon corresponding to the system switching mode or prohibit a system switching function corresponding to the system switching mode.

In the technical solution, the target wearable device includes, but is not limited to the above mentioned types, and further includes wearable headsets and the like; and if the target wearable device can communicate with the terminal normally, it is represented that the user of the terminal is the owner of the terminal, but not the illegal user. Therefore, the icon corresponding to the system switching mode can be displayed in the current system, for the owner of the terminal to switch the current system to the target system in the system switching mode. Otherwise, if the communication is abnormal, it is represented that the target wearable device is far from the terminal, and further represented that the user of the terminal is the illegal user, but not the owner of the terminal. Therefore, the icon corresponding to the system switching mode can be hid in the current system, so that the user of the terminal does not know of the existence of the target system having the higher security level and has no will to decode the target system for stealing private data of the target system. Thus the security of the target system having the higher security level and the internal data can be ensured, or the user of the terminal is prohibited to access the target system in the system switching mode by closing a switching function corresponding to the system switching mode, so as to ensure the security of the data of the target system.

According to another aspect of the present disclosure, a terminal is provided, the terminal includes the system processing device in any one of the technical solution as mentioned above.

In the technical solution, by setting the system processing device in the terminal, illegal users can be judged accurately, the illegal users cannot access a target system having a higher security in a system switching mode or even if the target system is accessed via the system switching mode by the illegal users, the illegal users cannot use the target system normally, thereby ensuring security of the target system having the higher security level and internal data therein.

The technical solution of the present disclosure can accurately judge illegal users, make the illegal users cannot access a target system having a higher security in a system switching mode or even if the target system is accessed via the system switching mode by the illegal users, the illegal users cannot use the target system normally, thereby ensuring security of the target system having the higher security level and internal data therein.

### BRIEF DESCRIPTION OF THE DRAWINGS

FIG. 1 shows a schematic flowchart of one embodiment of a system processing method according to the present disclosure;
FIG. 2 shows a schematic flowchart of another embodiment of a system processing method according to the present disclosure;
FIG. 3 shows a schematic structural diagram of one embodiment of a system processing device according to the present disclosure;
FIG. 4 shows a structural diagram of one embodiment of the system processing device according to the present disclosure;
FIG. 5 shows a schematic structural diagram of one embodiment of a terminal according to the present disclosure.

### DETAILED DESCRIPTION

In order to more clearly understand the above objectives, features and advantages of the present disclosure, the drawings combined with detailed description illustrate the present disclosure hereinafter. It should be noted that, embodiments of the present disclosure and features of the embodiments can be combined, when there is no conflict.

Various details are described in the following descriptions for better understanding of the present disclosure, however, the present disclosure may also be implemented in other ways other than those described herein, accordingly, the scope of the present disclosure is not limited by the specific embodiments disclosed below.

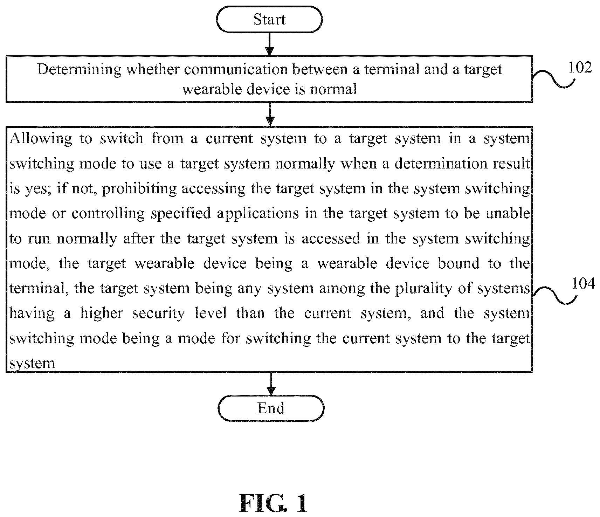

FIG. 1 shows a schematic flowchart of one embodiment of a system processing method according to the present disclosure.

As shown in FIG. 1, according to one embodiment of the present disclosure, the system processing method includes: step 102, determining whether communication between the terminal and a target wearable device is normal; step 104, allowing to switch from a current system to a target system in a system switching mode to use the target system normally when a determination result is yes; if not, prohibiting access to the target system in the system switching mode or controlling specified applications in the target system to be unable to run normally after the target system is accessed in the system switching mode. The target wearable device is a wearable device bound to the terminal, the target system is any system among the plurality of systems having a higher security level than the current system, and the system switching mode is a system switching mode for switching the current system to the target system.

In the technical solution, as the target wearable device is a wearable device carried by an owner of the terminal, therefore, an identity of the user can be identified by determining whether communication between the terminal and the target wearable device is normal. If the communication is normal, it is indicated that the target wearable device is closer to the terminal, and the user of the terminal is further determined to be the owner of the terminal, but not an illegal user. Accordingly, a corresponding function of the system switching mode can be used, the current system is allowed to switch to the target system in the system switching mode, and the target system can be used normally. Otherwise, if the communication is abnormal, it is indicated that the target wearable device is far from the terminal, and the user of the terminal is further determined to be an illegal user, but not the owner of the terminal. Accordingly, the system switching mode can be hidden or the corresponding function is prohibited, or functions of the target system are limited, so that the user cannot use the system switching mode to access the target system, or cannot utilize the target system normally even if the user accesses the target system in the system switching mode, thereby ensuring security of the target system having a higher security level and internal data therein.

The system switching mode includes a software system switching mode and a hardware system switching mode, and includes all modes that can switch the current system to the target system, for example, the system switching mode can be a virtual identifier to switch from the current system to the target system or a physical switching key to switch from the current system to the target system;

When the system switching mode is the software system switching mode, allowing to switch from the current system to the target system in the system switching mode to use the target system normally includes: displaying an icon corresponding to the system switching mode on a display interface of the terminal, for the owner of the terminal switching the current system to the target system in the system switching mode and utilizing the target system normally. Prohibiting access to the target system in the system switching mode includes: hiding the icon corresponding to the system switching mode and further hiding the target system having the higher security level, so that the user of the terminal does not know of the existence of the target system having the higher security level and has no will to decode the target system for stealing private data of the target system, thus the security of the target system having the higher security level and the internal data can be ensured; or closing a switching function corresponding to the system switching mode to prohibit the user of the terminal from accessing the target system in the system switching mode;

When the system switching mode is the hardware system switching mode, allowing to switch from the current system to the target system in the system switching mode to use the target system normally includes: displaying the system switching mode on the display interface of the terminal and activating the system switching function corresponding to the system switching mode, so that the owner of the terminal switches the current system to the target system according to the system switching mode and utilizes the target system normally. Prohibiting access to the target system in the system switching mode includes: hiding the system switching mode or closing the system switching function corresponding to the system switching mode, so that the owner of the terminal cannot switch the current system to the target system;

No matter whether the system switching mode is the software system switching mode or the hardware system switching mode, the specified applications includes: applications related to data in the target system. Controlling the specified applications in the target system to be unable to run normally after the target system is accessed in the system switching mode includes: controlling a contact list, call logs, short messages, WECHAT™ messages, Multimedia Messaging Service (MMS) messages, notepads, voice services, data services, and other applications to be disabled, so that the user of the terminal cannot utilize the target system normally, and further cannot view or use data in the target system having the higher security level or execute illegal operations in the target system, thereby the security of the data in a system having a higher authority can be ensured sufficiently.

In the above embodiment, preferably, determining whether the communication between the terminal and the target wearable device is normal includes: controlling the terminal to send a communication request to the target wearable device; determining whether the terminal receives a communication response from the target wearable device within a preset interval, determining that the communication between the terminal and the target wearable device is normal when a determination result is yes; if not, determining that the communication between the terminal and the target wearable device is abnormal.

In the technical solution, as the communication between the target wearable device and the terminal is limited by a distance, thus, by determining whether the communication response is received from the target wearable device within the preset interval, it can be determined that whether the user of the terminal is an illegal user accurately. That is, if the illegal user is using the terminal, the illegal user must be far from an owner of the target wearable device (namely the owner of the terminal), thus the target wearable device cannot receive any request signal. Accordingly, the terminal cannot receive any communication response from the target wearable device within the preset interval, and the communication between them is abnormal. Otherwise, if the terminal receives the communication response from the target wearable device within the preset interval, the communication between them is normal. Certainly, communication ways between them may be wired communication ways or wireless communication ways, the wireless communication ways may be BLUETOOTH™, 2.4 G, or other communication ways.

In the above technical solution, preferably, when the target wearable device includes a plurality of wearable devices, determining whether the communication between the terminal and the target wearable device is normal includes: determining that the communication between the terminal and the target wearable device is normal when a number of wearable devices that communicate with the terminal normally is greater than a preset number; if not, determining that the communication between the terminal and the target wearable device is abnormal.

In the technical solution, determining whether the communication between the terminal and the target wearable device is normal by determining whether the number of the wearable devices that communicate with the terminal normally is greater than the preset number, can improve an accuracy rate of determining whether the communication is normal, and avoid a misjudge.

In the above technical solution, preferably, when the target wearable device communicates with the terminal, the system processing method further includes sending a prompt signal to the terminal and the other wearable devices among the target wearable device if the target wearable device is disconnected to the terminal.

In the technical solution, when the target wearable device communicates with the terminal, the prompt signal is sent to the terminal and the other wearable devices among the target wearable device if the target wearable device is disconnected to the terminal, thereby avoiding a misoperation of the user and avoiding a disconnection of the communication as a distance between the target wearable device and the terminal is widened unintentionally when the target wearable device communicates with the terminal. Meanwhile, theft of the terminal and the target wearable device can be avoided and states of the target wearable device and the terminal can be prompted to the user timely.

In the above technical solution, preferably, the target wearable device includes at least one of wearable glasses, wearable earrings, a wearable watch, and a wearing bracelet. Allowing to switch from a current system to a target system in a system switching mode to use the target system normally when a determination result is yes; if not, prohibiting access to the target system in the system switching mode or controlling specified applications in the target system to be unable to run normally after the target system is accessed in the system switching mode includes: displaying an icon corresponding to the system switching mode when the determination result is yes; if not, hiding the icon corresponding to the system switching mode or prohibiting a system switching function corresponding to the system switching mode.

In the technical solution, the target wearable device includes, but is not limited to the above mentioned types, and further includes wearable headsets and the like; and if the target wearable device can communicate with the terminal normally, it is represented that the user of the terminal is the owner of the terminal, but not the illegal user. Therefore, the icon corresponding to the system switching mode can be displayed in the current system, for the owner of the terminal to switch the current system to the target system in the system switching mode. Otherwise, if the communication is abnormal, it is represented that the target wearable device is far from the terminal, and further represented that the user of the terminal is the illegal user, but not the owner of the terminal. Therefore, the icon corresponding to the system switching mode can be hid in the current system, so that the user of the terminal does not know of the existence of the target system having the higher security level and has no will to decode the target system for stealing private data of the target system. Thus the security of the target system having the higher security level and the internal data can be ensured, or the user of the terminal is prohibited to access the target system in the system switching mode by closing a switching function corresponding to the system switching mode, so as to ensure the security of the data of the target system.

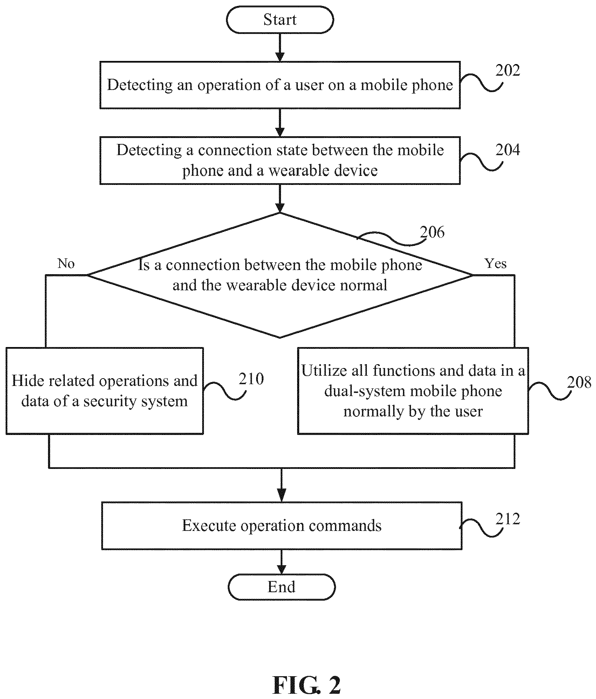

FIG. 2 shows a schematic flowchart of another embodiment of a system processing method according to the present disclosure.

As shown in FIG. 2, according to another embodiment of the present disclosure, the system processing method (in this embodiment, the terminal is a mobile phone, which is installed a dual system including an security system and an ordinary system, the mobile phone being bound to a plurality of wearable devices, and one wearable device can be bound to different mobile phones) includes:

Step 202, an operation of a user on the mobile phone is detected, for example, detecting an operation of the user to wake up or start up the mobile phone from a standby state.

Step 204, a connection state between the mobile phone and a wearable device is being detected. A device communication module in the mobile phone detects a current communication connection state of the mobile phone according to a wearable device binding list. The wearable device binding list includes related data of a binding between the mobile phone and the wearable device, for example, the mobile phone is bound with and communicated with the wearable glasses, the wearable earrings, the wearable watch, and the wearable bracket.

Step 206, it is determined that whether the connection between the mobile phone and the wearable device is normal. If a determination result is yes, that is, the communication connection state between the mobile phone and at least one bound wearable device is normal (when a number of wearable devices that communicate with the terminal normally is greater than a preset number, it can be determined that the communication between the mobile phone and the target wearable device is normal), step 208 is executed. If the determination is not, that is, a plurality of wearable device bound with the mobile phone are in a disconnection state, and it is represented that the mobile phone may be borrowed by others or be lost, step 210 is executed.

Step 208, when the connection between the mobile phone and the wearable device is normal, a related operation mode to access the security system (e.g., a system switching mode of the security system) and data of the security system are displayed for the user to switch into the security system quickly.

Step 210, the related operation mode to access the security system and the data of the security system are hidden, to avoid other users to find the security system in the mobile phone and to reduce the risk of decoding the security system, thereby preventing the information in the security system being stole illegally and improving the security performance of the mobile phone. In addition, a vibration notification, a voice notification and/or a lighting notification, and other prompt signals are sent to the other wearable device(s) bound with the mobile phone, to prompt the user that the terminal may be out of a known range of the user.

Step 212, the mobile phone executes a corresponding command according to the operation of the user, for example, the mobile phone executes a command to enter in a wakeup state from the standby state.

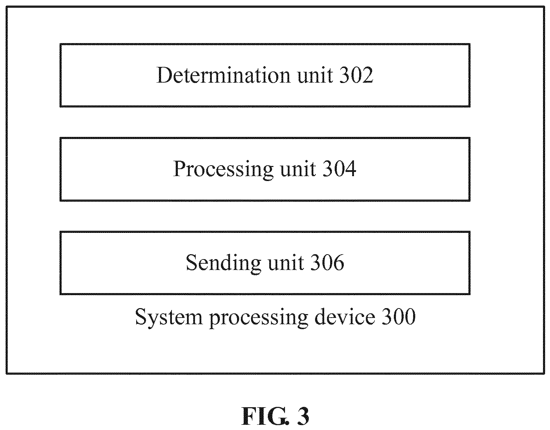

FIG. 3 shows a schematic structural diagram of one embodiment of a system processing device according to the present disclosure.

As shown in FIG. 3, according to one embodiment of the present disclosure, the system processing device 300 includes: a determination unit 302 and a processing unit 304. The determination unit 302 is configured to determine whether communication between the terminal and a target wearable device is normal; the processing unit 304 is configured to allow to switch from a current system to a target system in a system switching mode to use the target system normally when a determination result is yes; if not, prohibit accessing the target system in the system switching mode or controls specified applications in the target system to be unable to run normally after the target system is accessed in the system switching mode. The target wearable device is a wearable device bound to the terminal, the target system is any system among the plurality of systems having a higher security level than the current system, and the system switching mode is a system switching mode that switches the current system to the target system.

In the technical solution, as the target wearable device is a wearable device carried by an owner of the terminal, therefore, an identity of the user can be identified by determining whether communication between the terminal and the target wearable device is normal. If the communication is normal, it is indicated that the target wearable device is closer to the terminal, and the user of the terminal is further determined to be the owner of the terminal, but not an illegal user. Accordingly, a corresponding function of the system switching mode can be used, the current system is allowed to switch to the target system in the system switching mode, and the target system can be used normally. Otherwise, if the communication is abnormal, it is indicated that the target wearable device is far from the terminal, and the user of the terminal is further determined to be an illegal user, but not the owner of the terminal. Accordingly, the system switching mode can be hidden or the corresponding function is prohibited, or functions of the target system are limited, so that the user cannot use the system switching mode to access the target system, or cannot utilize the target system normally even if the user accesses the target system in the system switching mode, thereby ensuring security of the target system having a higher security level and internal data therein.

The system switching mode includes a software system switching mode and a hardware system switching mode, and includes all modes that can switch the current system to the target system, for example, the system switching mode can be a virtual identifier to switch from the current system to the target system or a physical switching key to switch from the current system to the target system;

When the system switching mode is the software system switching mode, allowing to switch from the current system to the target system in the system switching mode to use the target system normally includes: displaying an icon corresponding to the system switching mode on a display interface of the terminal, for the owner of the terminal switching the current system to the target system in the system switching mode and utilizing the target system normally. Prohibiting access to the target system in the system switching mode includes: hiding the icon corresponding to the system switching mode and further hiding the target system having the higher security level, so that the user of the terminal does not know of the existence of the target system having the higher security level and has no will to decode the target system for stealing private data of the target system, thus the security of the target system having the higher security level and the internal data can be ensured; or closing a switching function corresponding to the system switching mode to prohibit the user of the terminal from accessing the target system in the system switching mode;

When the system switching mode is the hardware system switching mode, allowing to switch from the current system to the target system in the system switching mode to use the target system normally includes: displaying the system switching mode on the display interface of the terminal and activating the system switching function corresponding to the system switching mode, so that the owner of the terminal switches the current system to the target system according to the system switching mode and utilizes the target system normally. Prohibiting access to the target system in the system switching mode includes: hiding the system switching mode or closing the system switching function corresponding to the system switching mode, so that the owner of the terminal cannot switch the current system to the target system;

No matter whether the system switching mode is the software system switching mode or the hardware system switching mode, the specified applications includes: applications related to data in the target system. Controlling the specified applications in the target system to be unable to run normally after the target system is accessed in the system switching mode includes: controlling a contact list, call logs, short messages, WECHAT™ messages, MMS messages, notepads, voice services, data services, and other applications to be disabled, so that the user of the terminal cannot utilize the target system normally, and further cannot view or use data in the target system having the higher security level or execute illegal operations in the target system, thereby the security of the data in a system having a higher authority can be ensured sufficiently.

In the above embodiment, preferably, the determination unit 302 is configured to: control the terminal to send a communication request to the target wearable device; determine whether the terminal receives a communication response from the target wearable device within a preset interval, determine that the communication between the terminal and the target wearable device is normal when a determination result is yes; if not, determine that the communication between the terminal and the target wearable device is abnormal.

In the technical solution, as the communication between the target wearable device and the terminal is limited by a distance, thus, by determining whether the communication response is received from the target wearable device within the preset interval, it can be determined that whether the user of the terminal is an illegal user accurately. That is, if the illegal user is using the terminal, the illegal user must be far from an owner of the target wearable device (namely the owner of the terminal), thus the target wearable device cannot receive any request signal. Accordingly, the terminal cannot receive any communication response from the target wearable device within the preset interval, and the communication between them is abnormal. Otherwise, if the terminal receives the communication response from the target wearable device within the preset interval, the communication between them is normal. Certainly, communication ways between them may be wired communication ways or wireless communication ways, the wireless communication ways may be BLUETOOTH™, 2.4 G, or other communication ways.

In the above technical solution, preferably, when the target wearable device includes a plurality of wearable devices, the determination unit 302 is further configured to: determine that the communication between the terminal and the target wearable device is normal when a number of wearable devices that communicate with the terminal normally is greater than a preset number; if not, determine that the communication between the terminal and the target wearable device is abnormal.

In the technical solution, determining whether the communication between the terminal and the target wearable device is normal by determining whether the number of the wearable devices that communicate with the terminal normally is greater than the preset number, can improve an accuracy rate of determining whether the communication is normal, and avoid a misjudge.

In the above technical solution, preferably, when the target wearable device communicates with the terminal, the system processing device further includes a sending unit 306 that sends a prompt signal to the terminal and the other wearable devices among the target wearable device if the target wearable device is disconnected to the terminal.

In the technical solution, when the target wearable device communicates with the terminal, the prompt signal is sent to the terminal and the other wearable devices among the target wearable device if the target wearable device is disconnected to the terminal, thereby avoiding a misoperation of the user and avoiding a disconnection of the communication as a distance between the target wearable device and the terminal is widened unintentionally when the target wearable device communicates with the terminal. Meanwhile, theft of the terminal and the target wearable device can be avoided and states of the target wearable device and the terminal can be prompted to the user timely.

In the above technical solution, preferably, the target wearable device includes at least one of wearable glasses, wearable earrings, a wearable watch, and a wearing bracelet. The processing unit 304 is configured to: display an icon corresponding to the system switching mode when the determination result is yes; if not, hide the icon corresponding to the system switching mode or prohibit a system switching function corresponding to the system switching mode.

In the technical solution, the target wearable device includes, but is not limited to the above mentioned types, and further includes wearable headsets and the like; and if the target wearable device can communicate with the terminal normally, it is represented that the user of the terminal is the owner of the terminal, but not the illegal user. Therefore, the icon corresponding to the system switching mode can be displayed in the current system, for the owner of the terminal to switch the current system to the target system in the system switching mode. Otherwise, if the communication is abnormal, it is represented that the target wearable device is far from the terminal, and further represented that the user of the terminal is the illegal user, but not the owner of the terminal. Therefore, the icon corresponding to the system switching mode can be hid in the current system, so that the user of the terminal does not know of the existence of the target system having the higher security level and has no will to decode the target system for stealing private data of the target system. Thus the security of the target system having the higher security level and the internal data can be ensured, or the user of the terminal is prohibited to access the target system in the system switching mode by closing a switching function corresponding to the system switching mode, so as to ensure the security of the data of the target system.

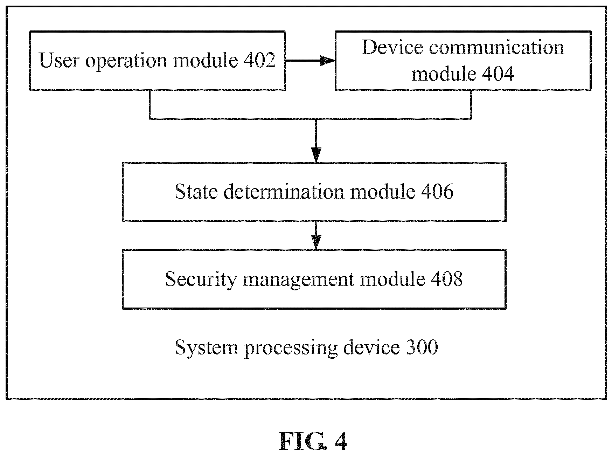

FIG. 4 shows a structural diagram of one embodiment of the system processing device according to the present disclosure.

As shown in FIG. 4, according to one embodiment of the present disclosure, a system processing device 300 (in this embodiment, the terminal is a mobile phone, which is installed a dual system including an security system and an ordinary system, the mobile phone being bound to a plurality of wearable devices and one wearable device can be bound to different mobile phones) includes:

A user operation module 402, which is configured to detect and execute an operation of a user on the mobile phone (a specified operation), and sends detect results to a state determination module 406.

A device communication module 404, which is configured to manage a communication connection between the mobile phone and the wearable device, and maintain a wearable device binding list, for example, the device communication module 404 may update the wearable device binding list when adding or reducing the wearable devices in the wearable device binding list. Certainly, in the wearable device binding list, a same wearable device may correspond to a plurality of mobile phones, and a same mobile phone may correspond to a plurality of wearable devices.

A state determination module 406 determines whether the connection between the mobile phone and the wearable device is normal according to signals from the user operation module 402 and the device communication module 404, and sends specific operation commands to a security management module 408 and the device communication module 404 according to a connection state between the mobile phone and the wearable device.

The security management module 408 executes a corresponding security protection operation according to an operation command sent by the state determination module 406. For example, when a communication connection state between the mobile phone and at least one bound wearable device is normal, the security management module 408 displays a related operation mode to access the security system (e.g., a system switching mode) and data of the security system; when the mobile phone and the bound wearable device are in a disconnection state, the security management module 408 hides the related operation mode to access the security system and the data of the security system, and sends a vibration notification, a voice notification and/or a lighting notification, and other prompt signals to the wearable device(s) bound with the mobile phone simultaneously, to prompt the user that the terminal may be out of a known range of the user.

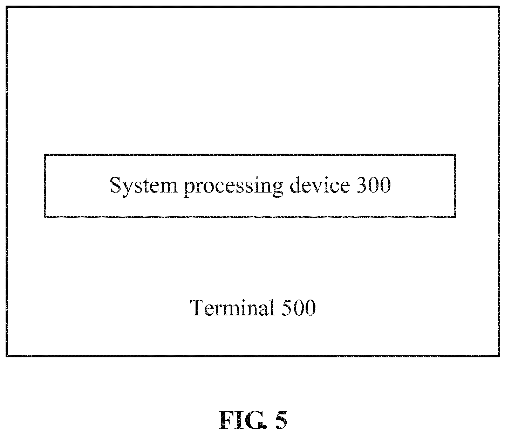

FIG. 5 shows a schematic structural diagram of one embodiment of a terminal according to the present disclosure.

As shown in FIG. 5, according to one embodiment of the present disclosure, a terminal 500 includes the system processing device 300 in any one of the technical solution as mentioned above.

In the technical solution, by setting the system processing device 300 in the terminal 500, illegal users can be judged accurately, the illegal users cannot access a target system having a higher security in a system switching mode or even if the target system is accessed via the system switching mode by the illegal users, the illegal users cannot use the target system normally, thereby ensuring security of the target system having the higher security level and internal data therein.

In combination with the drawings, the present disclosure explicated above can accurately judge illegal users, make the illegal users cannot access a target system having a higher security in a system switching mode or even if the target system is accessed via the system switching mode by the illegal users, the illegal users cannot use the target system normally, thereby ensuring security of the target system having the higher security level and internal data therein.

The above mentioned descriptions are merely preferred embodiments of the present disclosure, and are not to limit the present disclosure. For persons skilled in the art, various changes or modifications may be made to the present disclosure. Any modification, equivalent, and improvement without departing from the spirit and scope of the present disclosure, should be within the protection scope of the present disclosure.

## Claims

1. A system processing method being used in a terminal, the terminal comprising a plurality of systems, the system processing method comprising:
determining whether communication between the terminal and a target wearable device is normal;
allowing to switch from a current system to a target system in a system switching mode to use the target system normally when a determination result is yes; if not, prohibiting access to the target system in the system switching mode or controlling specified applications in the target system to be unable to run normally after the target system is accessed in the system switching mode, the target wearable device being a wearable device bound to the terminal, the target system being any system among the plurality of systems having a higher security level than the current system, and the system switching mode being a mode for switching the current system to the target system.

2. The system processing method of claim 1, wherein determining whether the communication between the terminal and the target wearable device is normal comprises:
controlling the terminal to send a communication request to the target wearable device;
determining whether the terminal receives a communication response from the target wearable device within a preset interval, determining that the communication between the terminal and the target wearable device is normal when a determination result is yes; if not, determining that the communication between the terminal and the target wearable device is abnormal.

3. The system processing method of claim 1, when the target wearable device comprises a plurality of wearable devices, wherein determining whether the communication between the terminal and the target wearable device is normal comprises:
determining that the communication between the terminal and the target wearable device is normal when a number of wearable devices that communicate with the terminal normally is greater than a preset number; if not, determining that the communication between the terminal and the target wearable device is abnormal.

4. The system processing method of claim 1, further comprising:
when the target wearable device communicates with the terminal, sending a prompt signal to the terminal and the other wearable devices among the target wearable device if the target wearable device is disconnected to the terminal.

5. The system processing method of any of claims 1 to 4, wherein:
the target wearable device comprises at least one of wearable glasses, wearable earrings, a wearable watch, and a wearing bracelet; and
displaying an icon corresponding to the system switching mode when the determination result is yes; if not, hiding the icon corresponding to the system switching mode or prohibiting a system switching function corresponding to the system switching mode.

6. A system processing device used in a terminal, the terminal comprising a plurality of systems, the system processing device comprising:
a determination unit that determines whether communication between the terminal and a target wearable device is normal;
a processing unit that allows to switch from a current system to a target system in a system switching mode to use the target system normally when a determination result is yes; if not, prohibits accessing the target system in the system switching mode or controls specified applications in the target system to be unable to run normally after the target system is accessed in the system switching mode;
the target wearable device being a wearable device bound to the terminal, the target system being any system among the plurality of systems having a higher security level than the current system, and the system switching mode being a mode for switching the current system to the target system.

7. The system processing device of claim 6, wherein the determination unit is configured to:
control the terminal to send a communication request to the target wearable device;
determine whether the terminal receives a communication response from the target wearable device within a preset interval, determine that the communication between the terminal and the target wearable device is normal when a determination result is yes; if not, determine that the communication between the terminal and the target wearable device is abnormal.

8. The system processing device of claim 6, when the target wearable device comprises a plurality of wearable devices, wherein the determination unit is further configured to:
determine that the communication between the terminal and the target wearable device is normal when a number of wearable devices that communicate with the terminal normally is greater than a preset number; if not, determine that the communication between the terminal and the target wearable device is abnormal.

9. The system processing device of any of claims 6 to 8, wherein:
the target wearable device comprises at least one of wearable glasses, wearable earrings, a wearable watch, and a wearing bracelet; and
the processing unit is configured to display an icon corresponding to the system switching mode when the determination result is yes; if not, hide the icon corresponding to the system switching mode or prohibit a system switching function corresponding to the system switching mode.

10. A terminal comprising the system processing device of any of claims 6-8.
